# EUROPEAN PATENT APPLICATION

(11) **EP 4 484 915 A1**
(43) Date of publication of application: **01.01.2025**
(21) Application number: 23181760.2
(22) Date of filing: 27.06.2023
(51) Int. Cl.: G01M 13/02

(54) **METHOD FOR DETERMINING CONDITIONS OF A ROLLER CHAIN DRVE OR BUSH CHAIN DRIVE**

(71) Applicant: Renold PLC, Manchester M22 5XB (GB)
(72) Inventor: SCHNEIDER, Tizian, 66123 Saarbrücken (DE); PLATE, Johannes, 33034 Brakel (DE); RAGNITZ, Detlef, 37586 Dassel (DE)
(74) Representative: Pfenning, Meinig & Partner mbB

(57) **Abstract**

The application concerns a method, an apparatus, a server and a computer program product for determining conditions of a roller chain drive or bush chain drive (1) having a plurality of rollers (2) and/or bushes, chain pins (3) and sprockets (4). The method comprises following steps: recording an emitted sound occurring in the vicinity of the roller chain drive or bush chain drive and generated during movement of the rollers and/or bushes onto the sprockets, processing of data of the recorded emitted sound in the time and/or in the frequency domain, including characteristic noise events (107, 108, 109) and their time differences and determining the conditions of the roller chain drive or bush chain drive based on the processed data.

## Description

The invention described in this application refers to the field of mechanical engineering, measurement and data analysis and processing and it is preferably applicable to the analysis of mechanical chain drives. More in detail, it is directed towards a method for determining conditions of a roller chain drive or bush chain drive, such as for example a lubrication status, a chain tension, a chain elongation or a sprocket wear.

For standard roller or bush chains including conveyor chains there is a demand of methods for monitoring the status and wear of chains used in industrial applications. Well-known methods have relied on measurements by optical or electronic inspection looking at features, such as markers, on the chain passing sensors, usually two sensors, which are placed a fixed distance apart and recording the period of time that it takes for the particular feature or marker to pass from one sensor to the other sensor.

This type of monitoring and wear assessment requires prior knowledge, such as the behavior of the chain in a status without wear in order to determine a change corresponding to an amount of wear in the chain.

The patent application US 2020/0240888A1 discloses a method for predicting a wear amount of a chain pin, wherein the method comprises using a friction noise, applying a sound source separation technique based on a frequency analysis result and detecting time differences in the time domain. The results are analyzed by comparison with data stored in a database.

The patent application DE 102011055576 discloses a method for determining a tension of a chain by capturing oscillations of the chain, e.g. by a microphone, processing the captured data by a smartphone or another data processing unit, including carrying out a Fourier transformation and determining a chain tension status.

The methods that are known from the prior art appear neither transparent nor effective and in some cases do not provide a full set of the desired results. It is therefore an objective of the present invention to provide an improved and flexible method for assessing the conditions of a roller chain drive or bush chain drive.

Such a method and an apparatus, server and computer program product are provided by the independent claims of this application. Preferred embodiments of the method, apparatus, server and computer program product are further provided in the dependent claims.

Hence, the invention is referring to a method for determining conditions of a roller chain drive, bush chain drive or a conveyor chain drive having a plurality of rollers and/or bushes, chain pins and at least one sprocket, comprising the following steps:
moving the roller chain drive or bush chain drive;
capturing measurement data comprising recording an emitted sound of the roller chain drive or bush chain drive,
carrying out a transformation of the measurement data to the frequency domain,
processing of the measurement data in the time as well as frequency domain; identifying in the time domain periodic characteristic noise events and
determining time differences of subsequent pairs of characteristic noise events;
determining a statistical distribution of the determined time differences;
determining the conditions of the roller chain drive or bush chain drive based on parameters of the statistical distribution.

The goal of this method and procedure is to determine statements that represent different aspects of the status of the chain, including aspects related to the wear and/or in some cases also including aspects relating to the lubrication status.

Therein, the elongation of the chain is of particular interest as well as the deviation of the elongation or wear of single links of the chain from an average value.

For the analysis, sound signals of the moving chain and a sprocket are captured, e.g. by an accelerometer or a microphone. For the measurement/capture, a mobile device, for example a mobile phone/smartphone can be used. The measurement data that are captured can therefore be electronic signals representing the noise generated by the chain drive.

These data can be transformed e.g. by a Fourier transformation, in particular a fast Fourier transformation, into the frequency domain. In the frequency domain, elements of the transformed data, for example discrete frequencies or frequency windows with a specific focus on the related harmonics to the base harmonic frequency, can be selected in order to eliminate a part of the noise that is not specific for the goal that shall be achieved. The selected transformed data from the frequency domain may then be transformed back to the time domain and be analysed.

By analysing these data in the time domain, characteristic periodical noise events can be identified easier, because unrelated background noise is eliminated. These characteristic noise events in some cases represent the typical noise signature of each of the links of the chain when it is in contact with the sprocket. The noise events may e.g. represent roller impact peaks on the sprocket.

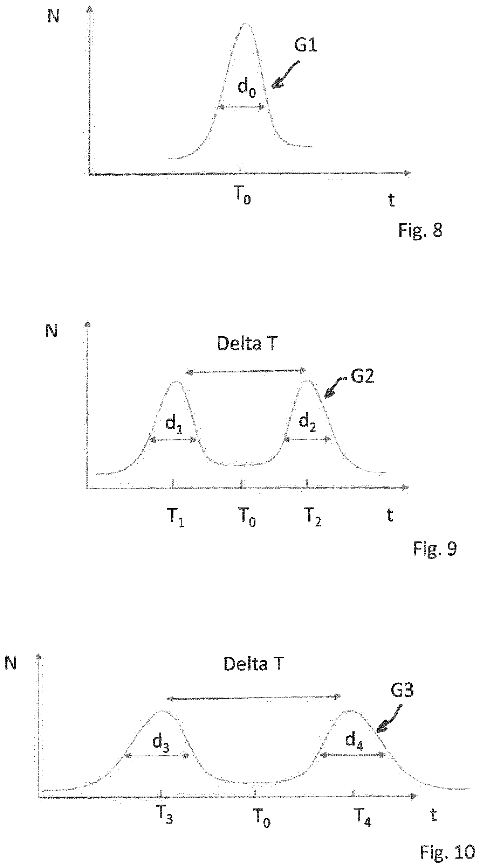

If the chain is not elongated, all the impact peak distances between rollers of different links adjacent to each other are nearly identical. Hence, the time differences of subsequent pairs of characteristic noise events will be constant. A statistical distribution of the time differences for several links passing the sprocket in this case will show that there is one peak only at one specific time difference (conf. Fig. 8).

As soon as the chain is elongated, every second characteristic noise event will be delayed due to the elongation of the chain and elongation of every second link. As the speed of the sprocket remains the same and the number of links of the chain passing the sprocket in a determined time interval remains the same, this means that half of the characteristic noise events are delayed while the other half of the characteristic noise events will be accelerated.

In the statistical distribution of the determined time differences measured at several or many links of a chain, therefore two different typical time differences will occur wherein these two typical time differences correspond to the single time differences occurring at not elongated chain plus or minus a certain time distance. This time distance Delta T represents the relative elongation of the chain (conf. Fig. 9).

In order to determine the two typical time differences, the multitude of measured time differences can be statistically analysed and fitted to two Gaussian distributions, each of which represents one of the two occurring time differences. Then, the maximum of both Gaussian distributions can be determined as well as the standard deviation.

From the standard deviation of the time differences, an information concerning the distribution of the elongations of the single links of the chain may be derived.

This information is important because an elongation of one or a group of links which is deviating from an average elongation may be alarming and may seriously limit the usability of the chain. Therefore, a third condition parameter can be derived from both, the time distance between the peaks of the two Gaussian distributions and the standard deviation of both peaks and this derived third condition parameter may represent certain aspects of the wear status of the chain as is explained further below.

In an implementation of the method, it may be provided that in the frequency domain, a main first harmonic and a complimentary first harmonic are selected for further processing wherein the frequency of the main first harmonic corresponds to the number of teeth of the sprocket multiplied by the number of revolutions of the sprocket per second and wherein the frequency of the complimentary first harmonic corresponds to half the frequency of the main first harmonic. This is caused by the offset of each second link to the first link in the time domain. An increasing complementary harmonics in the frequency domain at half of the first harmonic and the respective double harmonics will be an indication of the amount of wear of the chain.

In a further implementation the main first harmonic comprises the signal at the exact frequency of the main first harmonic and includes frequency signals of frequencies deviating less than 5%, in particular less than 2 %, further in particular less than 1%, further in particular less than 0,5% from the frequency of the main first harmonic and/or wherein the complimentary first harmonic comprises the signal at the exact frequency of the complimentary first harmonic and includes frequency signals of frequencies deviating less than 5%, in particular less than 2 %, further in particular less than 1%, further in particular less than 0,5% from the frequency of the complimentary first harmonic.

The selection of certain frequency windows for the data that are then transformed back to the time domain allows for the elimination of disturbing background noise. It is advantageous for the frequencies transformed back from the frequency domain to the time domain to include the main harmonics as well as the complementary harmonics representing the status of the wear rate of the chain. In addition, it may be necessary to select enough frequencies to get a sufficient representation of the characteristic noise events that shall be identified.

It may in one implementation of the method be provided that the frequency deviation from the main first harmonic and/or from the complimentary first harmonic and in particular the deviations from higher harmonics of the main first harmonic and the complimentary first harmonic are selected or selectable individually during the process of determining the conditions of a roller chain drive or bush chain drive.

The selection may be for example offered to a user on a smart phone, which serves to capture the noise and at least pre-process or process the measured data.

It may also be provided that at least the next 3, in particular the next 4 higher harmonics of the main first harmonic are selected for further processing and/or at least the next 3, in particular the next 5 higher harmonics of the complimentary first harmonic are selected for further processing.

It has emerged that this selection of harmonics creates a good basis for the further processing of the data.

In most cases, the selected harmonics are further processed and their signals are transformed back into the time domain.

After the transformation back to the time domain, the periodic characteristic noise events identified in the time domain may comprise periodic noise events each of which is representing interaction of one roller or bush of the chain with the at least one sprocket.

Typically, the parameters of the statistical distribution of the time differences on which the determination of the conditions of the roller chain drive or bush chain drive is based comprise the position(s) of one or more maxima of Gaussian distributions and/or the time distance of two maxima of Gaussian distributions and/or the standard deviation of one or more of the Gaussian distributions.

Therein, as explained above, a first condition parameter representing an average value of a percentage of elongation of the roller chain or bush chain is determined based on the time distance between the maxima of two Gaussian distributions of the determined time differences and/or that a second condition parameter is determined from the standard deviations of two Gaussian distributions of the determined time differences.

Further, a first and a second condition parameter can first be determined and a third condition parameter is determined based on the first and second parameter. The third condition parameter may represent one or more than one aspect of the wear and/or lubrication status of the chain.

The method may further in one potential implementation comprise a step of recording an emitted sound by a mobile device, in particular a mobile phone, and forwarding the emitted sound and/or data derived from the recorded sound signals to an external server and in particular forwarding the emitted sound and/or the data to the external server in real-time.

The measured data with or without a pre-processing can then be sent to the external server and be further processed there. The advantage of processing data on a server comprise that a higher data processing capacity may be available, that updates of a processing algorithms may be easier available and that on a server, data from a multitude of different chains are available and can be used for comparison and statistical analysis as well as for the training of a self-learning system.

The external server may process the data and send the determined conditions of the roller chain drive or bush chain drive back to the mobile device, which displays the conditions.

The invention may further refer to an apparatus, in particular a mobile device, configured to determine conditions of a roller chain drive or bush chain drive having a plurality of rollers and/or bushes, chain pins and sprockets by
capturing measurement data by recording an emitted sound of the moving roller chain drive or bush chain drive,
carrying out a transformation of the measurement data to the frequency domain,
processing of the measurement data in the time as well as frequency domain, identifying in the time domain periodic characteristic noise events and
determining time differences of subsequent pairs of characteristic noise events,
determining a statistical distribution of the determined time differences and
determining the conditions of the roller chain drive or bush chain drive based on parameters of the statistical distribution.

Further, the invention refers to a server configured to communicate, in particular in real-time, with at least one mobile device and determine conditions of at least one roller chain drive or bush chain drive having a plurality of rollers and/or bushes, chain pins and sprockets by
receiving measurement data or pre-processed measurement data from the at least one mobile device of an emitted sound of the at least one roller chain drive or bush chain drive and generated during movement of the rollers and/or bushes on to the sprockets,
carrying out a transformation of the measurement data to the frequency domain,
processing the measurement data in the time as well as frequency domain, identifying in the time domain periodic characteristic noise events and
determining time differences of subsequent pairs of characteristic noise events,
determining a statistical distribution of the determined time differences,
determining the conditions of the roller chain drive or bush chain drive based on parameters of the statistical distribution and
transmitting the conditions of the at least one roller chain drive or bush chain drive to the at least one mobile device.

The invention further refers to a computer program product configured to run on a data processing system and to determine conditions of a roller chain drive or bush chain drive having a plurality of rollers and/or bushes, chain pins and sprockets, wherein, when the program is running on the system, the data processing system is configured to perform the following steps:
carrying out a transformation of the measurement data to the frequency domain,
processing of the measurement data in the time as well as frequency domain; identifying in the time domain periodic characteristic noise events and
determining time distances of subsequent characteristic noise events;
determining a statistical distribution of the determined time differences;
determining the conditions of the roller chain drive or bush chain drive based on parameters of the statistical distribution.

The conditions of the roller chain drive or bush chain drive may, apart from an elongation status and data representing the standard deviation of the links of a chain from an average elongation, comprise a lubrication status which may be derived from the time distance of two peaks in the statistical distribution and the standard deviation of single measurements from the peak time of the statistical distributions after a Gauss fit. It can also be provided that for the analysis of conditions, apart from the methods explained above, the emitted noise can also be compared in the time and/or frequency domain, which structures of known noises which are stored In a database. A system for comparison for this purpose may comprise a self-learning system, for example a neural network.

The detected conditions of the roller chain drive or bush chain drive may comprise a chain tension and/or preferably a chain slack. The chain slack can be between 0.05% and 25% and preferably between 0.1% and 10% of a center distance length, which is, for example, the distance between two centers of the two sprockets. The chain slack is of particular importance for horizontally running roller chain drives or bush chain drives. Preferably, the method further comprises a step of comparing the chain tension to a predefined chain tension level. If the chain tension is higher than the predefined chain tension level, an abnormal operation of the roller chain drive or bush chain drive can be detected. If the roller chain drive or bush chain drive is operated in these cases, wear of the roller chain drive or bush chain drive will increase compared to a case of correct chain tension. In such cases, characteristic sounds are emitted that are typical for the respective condition of the roller chain drive or bush chain drive. Thus, an abnormal operation of the roller chain drive or bush chain drive can be detected so that a corresponding warning can be issued.

In addition, the detected conditions of the roller chain drive or bush chain drive may comprise a sprocket wear. Preferably, the conditions of the roller chain drive or bush chain drive comprise an estimated lifetime of the sprockets. Preferably, the method further comprises a step of comparing the sprocket wear to a predefined sprocket wear level. If the sprocket wear is higher than the predefined sprocket wear level, an abnormal operation of the roller chain drive or bush chain drive can be detected. In such cases, characteristic signals, e.g. sounds, are emitted that are typical for the respective condition of the roller chain drive or bush chain drive. Thus, an abnormal operation of the roller chain drive or bush chain drive can be detected so that a corresponding warning can be issued.

The method for determining the condition of a roller chain drive or bush chain drive may further include a step of providing instructions for optimizing the conditions of the roller chain drive or bush chain drive in order to reduce wear and in particular to increase the lifetime of the roller chain drive or bush chain drive. The instructions may include, for example, how and what amount (and which type) of lubricant must be supplied to the roller chain drive or bush chain drive to reduce wear. The instructions may be displayed to a user on a display device or may be sent to an automatic maintenance unit which may automatically take measures, for example provide additional lubricant to the chain.

Exemplary, preferred embodiments of the present invention are described below with reference to the following figures. In the figures, identical or similar alphanumeric reference signs are used for identical and similar features of the various embodiments. The following text will explicitly refer to a roller chain drive only but the applications refer to roller chain drives as well as bush chain drives.

The figures show:
- Figure 1: a schematic view of a roller chain,
- Figure 2: a schematic view of the roller chain of Fig. 1 from a different viewing angle,
- Figure 3: a schematic view of a roller chain drive,
- Figure 4a: a flowchart representing a method for determining conditions of a roller chain drive using a mobile device,
- Figure 4b: a view representing a configuration of an embodiment of a system for performing the method described in Fig. 4a for determining conditions of a roller chain drive using a mobile device,
- Figure 5a: a flowchart representing an alternative method for determining conditions of a roller chain drive using a mobile device and an external server,
- Figure 5b: a view representing a configuration of an embodiment of a system for performing the method described in Fig. 5a for determining conditions of a roller chain drive using a mobile device and an external server,
- Figure 6: a view representing the configuration of a system for performing a method for determining conditions of a plurality of roller chain drives using a plurality of mobile devices and an external server,
- Figure 7: a view representing the configuration of a system for performing a method for determining conditions of a roller chain drive using a mobile device and a plurality of external servers,
- Figure 8: a statistical distribution of time distances of pairs of noise events for an unused chain,
- Figure 9: a statistical distribution of time distances for a used chain showing a relative elongation of about 1,5%,
- Figure 10: a statistical distribution of time distances for a used chain showing a relative elongation of about 2,5%,
- Figure 11: a diagram showing the Time Distance Delta T and the standard deviation d of the Time Distance for a group of chains which are elongated about 1,5% and for a group of chains which are elongated about 2,5%,
- Figure 12: a typical sample of noise measurement data captured near a chain drive,
- Figure 13: a typical Fourier spectrum of transformed noise measurement data captured near a chain drive, and
- Figure 14: a graph representing characteristic noise events resulting from a Fourier spectrum as shown in Figure 13 after selection of frequency windows and transformation back to the time domain.

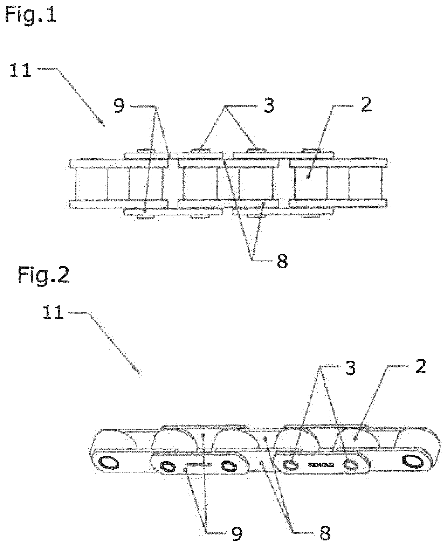

Figure 1 shows an embodiment of a roller chain 11 consisting of several inner link sections 8, outer link sections 9 and rollers 2. The inner link sections 8 and outer link sections 9 are arranged alternately and each pair of neighboring links is connected via a chain pin 3.

Figure 2 shows a different viewing angle of the roller chain 11 consisting of the same parts.

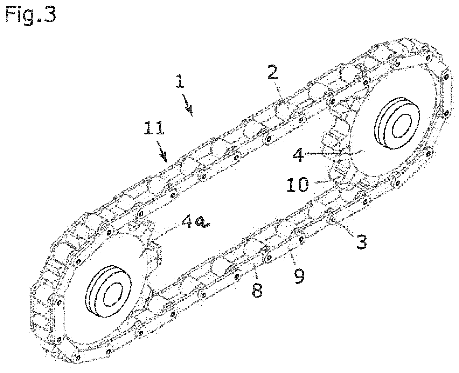

Figure 3 shows an embodiment of a roller chain drive 1 comprising two sprockets 4, 4a with a plurality of teeth 10 meshed with an endless loop roller chain 11, which comprises a plurality of rollers 2, chain pins 3, inner link sections 8 and outer link sections 9.

The roller chain 11 can be installed to move in one defined direction at a constant speed The emitted sound is for example generated when the roller chain 11 supported by the sprockets 4, 4a is operated by a driving force of at least one of the sprockets. The emitted sound 6 may comprise various elements of noise that are generated during movement of the rollers 2 contacting the sprockets 4. For example, the emitted sound 6 may include elements of noise generated by contact between the rollers 2 of the roller chain 11 and the teeth 10 of the sprockets 4, between the chain pins 3 and chain bushes (not shown) and between the rollers 2 of the roller chain 11 and the chain bushes.

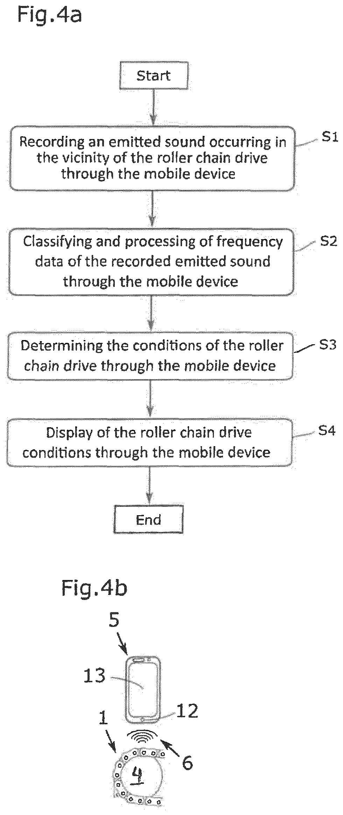

Figure 4a is a flowchart representing a method for determining conditions of the roller chain drive 1 according to an embodiment of the present invention. Figure 4b is a view representing the configuration of an embodiment of a system for performing the method described in Figure 4a.

First, an emitted sound 6 occurring in the vicinity of the roller chain drive 1 and generated, for example, during movement of the rollers 2 onto the sprockets 4 is recorded and transformed into frequency data by means of a fast Fourier transformation through a mobile device 5 (S1). The mobile device 5 comprises a microphone 12 for recording the emitted sound 6 occurring in the vicinity of the roller chain drive 1 and/or an accelerometer for detecting vibrations. The microphone 12 can be wired or wirelessly connected to the mobile device 5. This allows distinguishing between a normal operation and abnormal operation of the roller chain drive 1. If the roller chain drive 1 is used in the abnormal operation, wear of the roller chain drive 1 is higher than in the case when the roller chain drive 1 is used in the normal operation. Abnormal operating conditions are usually associated with a characteristic sound development, which in particular indicates increased wear of the roller chain drive 1. Said emitted sound 6 or abnormal accelerations/vibrations can therefore be used to determine the abnormal operation of the roller chain drive 1. The mobile device 5 may be a mobile phone 5, preferably a smartphone 5.

In a second step, the recorded emitted sound/vibrations and the frequency data of the recorded emitted sound 6 are processed by means of the mobile device 5 (S2). Further, a conversion from a time domain of the recorded emitted sound/vibrations to a frequency domain by the fast Fourier transformation can also be performed in step S2.

Therefore, a simple application software implementation is possible, wherein the recorded emitted sound and the frequency data processing is done directly on the mobile device 5. Thus, the method described in Fig. 4a can be used in locations where data reception is not accessible. In addition, the second step S2 can include a sub-step in which the recorded emitted sound 6 of the roller chain drive 1 is compared to a database of predefined emitted sounds stored on the mobile device 5.

In a third step, the conditions of the roller chain drive 1 are determined based on the classified and processed recorded emitted sound and frequency data by means of the mobile device 5 (S3). The conditions of the roller chain drive 1 may comprise one or more of the following conditions:
an elongation of the chain, the standard deviation of elongation of single links of the chain, which is represented by the statistical distribution of the processed data in the time domain, a lubrication status and/or a chain tension (and/or preferably a chain slack) and/or, for example a sprocket wear.

In addition, the third step S3 can include a sub-step in which each individual condition of the roller chain drive 1 is compared to a predefined individual condition level. If at least one individual condition of the roller chain drive 1 is below the predefined individual condition level, an abnormal operation of the roller chain drive 1 can be detected. If the roller chain drive 1 is operated in these cases, wear of the roller chain drive 1 including the chain and the sprockets, will increase. In addition, the third step S3 may include another sub-step of estimating the lifetime of the roller chain drive 1 based on the determined conditions of the roller chain drive 1. In addition, the third step S3 may include a further sub-step in which parameters (e.g. an amount of lubricant) are evaluated and measures determined to optimize the conditions of the roller chain drive 1 to reduce wear, and in particular to increase the lifetime of the roller chain drive 1. Based on the evaluated parameters, instructions (e.g. how and what amount of lubricant must be supplied) for optimizing the conditions of the roller chain drive 1 can be determined in a further sub-step. Commands to take the determined measures may be sent to a maintenance system. Through a permanent optimization of the parameters of the roller chain drive 1, the lifetime of the roller chain drive 1 can be increased.

In a fourth step, the conditions of the roller chain drive 1 are displayed through the mobile device 5 (S4). In particular, the mobile device 5 comprises a display 13 for displaying the condition of the roller chain drive 1. In addition, if at least one determined individual condition of the roller chain drive 1 is lower than a first predefined individual condition level, a degree of wear could be "good" or "green", if the determined individual condition of the roller chain drive 1 is higher than the first but lower than a second predefined individual condition level, the degree of wear could be "OK" or "orange" and if the individual condition is higher than the second predefined individual condition level, the degree of wear could be "worn" or "red". Furthermore, the amount of wear, the estimated lifetime, the parameters to optimize the conditions of the roller chain drive 1 and/or the instructions for optimizing the conditions of the roller chain drive 1 may be displayed on the display 13 of the mobile device 5.

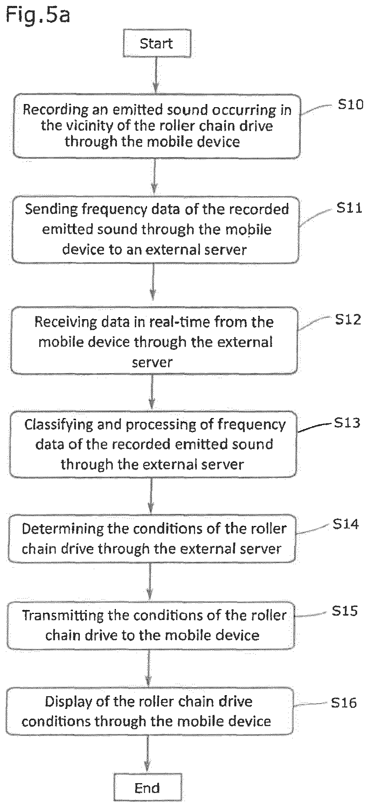

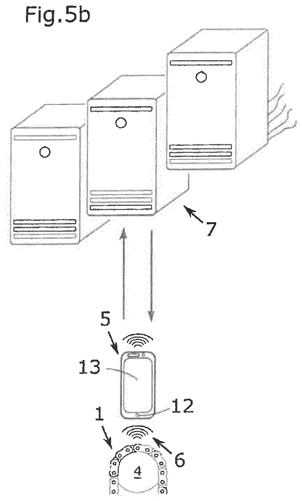

Figure 5a is a flowchart showing a method for determining conditions of the roller chain drive 1 according to another embodiment of the present invention. Figure 5b is a view showing the configuration of an embodiment of a system for performing the method described in Figure 5a.

In the first step S10, an emitted sound 6 occurring in the vicinity of the roller chain drive 1 and generated for example during movement of the rollers 2 onto the sprockets 4 is recorded by means of a mobile device 5 (similar to step S1 according to the method described in Figure 4a).

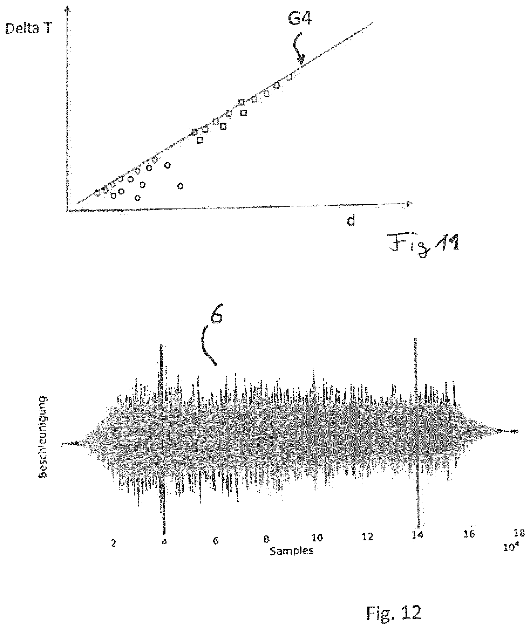

The embodiment shown in Fig. 5a includes a step S11 for forwarding the recorded emitted sound data, which are, in a typical representation of a measurement sample, shown in Fig. 12, by the mobile device 5 to an external server 7. The mobile device may in some cases perform a pre-processing and perform a Fourier transformation to provide data not only in the time domain, but also in the frequency domain (frequency data). The external server 7 receives the recorded emitted sound and, in some cases, the frequency data in real-time from the mobile device 5 (S12). In particular, the recorded emitted sound and the frequency data are forwarded to the external server 7 in real-time, preferably in the order of seconds or milliseconds. In step S13, the external server 7 classifies and processes the recorded emitted sound and the frequency data, and based on this, determines the conditions of the roller chain drive 1 in step S14. If the frequency data are not provided by the mobile phone, the server may perform the Fourier transformation.

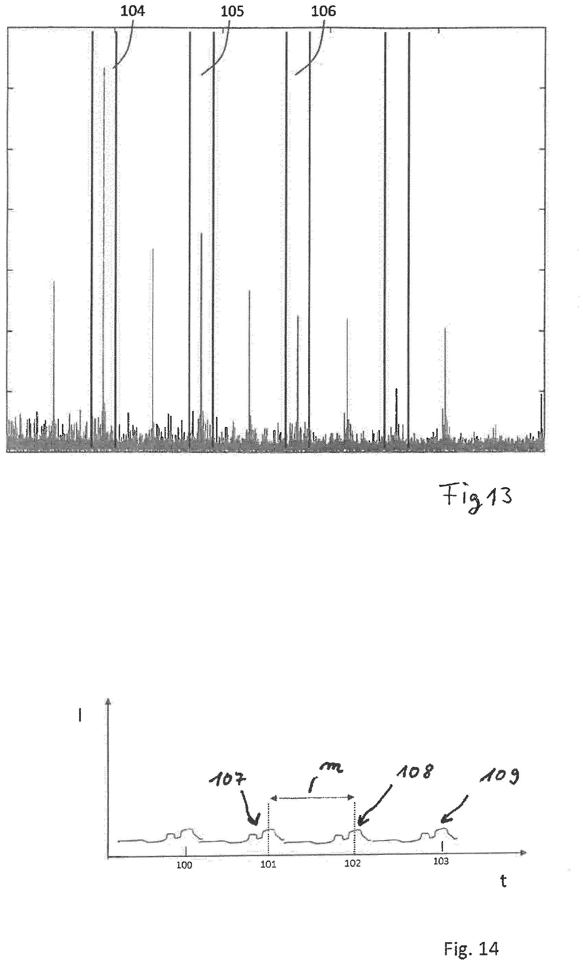

In the frequency domain, as shown in detail in Fig. 13, elements of the transformed data, for example several frequency windows, can be selected in order to eliminate a part of the noise that is not specific for the goal that shall be achieved. The selected transformed data from the frequency domain may then be transformed back to the time domain and be analysed.

By analysing these data in the time domain, characteristic periodical noise events can be identified as shown more in detail in Fig. 14, which represent the typical noise signature of each of the links or rollers of the chain when they make contact with a or the sprocket, in particular a tooth of the sprocket. The noise events may e.g. represent roller impact peaks on the sprocket.

For a new and unused chain, all time differences between noise events caused by rollers or pins of links adjacent to each other are nearly identical, apart from very small deviations caused by manufacturing. Hence, all the time differences of subsequent pairs of characteristic noise events will be the same and constant as shown in Fig.8. A Graph G1 of the statistical distribution of the time differences for several links passing the sprocket in this case shows that there is a peak only at one specific time difference T₀. A Gaussian distribution may be fitted to the determined time differences. The standard deviation d₀, as shown in Fig.8 of single time events from the peak value of the distribution will be minimal.

As soon as the chain is elongated, every second characteristic noise event will be delayed due to the elongation of the chain and deformation of every second link due to the deformation of the rollers and/or pins. As the speed of the sprocket remains the same and the number of links of the chain passing the sprocket in a determined time interval remains the same, this means that half of the characteristic noise events are delayed while the other half of the characteristic noise events will be accelerated.

In Fig. 9, the statistical distribution of the determined time differences measured for several or many links of a used chain is shown as a Graph G2, which to some extent shows the consequences of wear. The extent of relative elongation of the chain links in this case may be about 1,5%. Therefore two different typical time differences T₁, T₂ will occur in this case, wherein these two typical time differences will be compared to the constantly repeated time differences T₀ occurring at a not elongated chain. The time distance Delta T between T₁ and T₂ corresponding to the addition of the time distances of T₁ to T₀ and T₂ to T₀ represents the relative elongation of the chain and can be compared to elongation values measured before and the value can be displayed.

In order to determine the two distribution maxima at T₁ and T₂ for the typical time differences, the multitude of measured time differences of chain links can be statistically analysed and fitted to two Gaussian distributions, each of which represents one of the two occurring time differences. Then, the maximum of both Gaussian distributions can be determined as well as the standard deviations d₁ and d₂.

From the standard deviation/deviations d₁, d₂ of the time differences, an information concerning the distribution of the elongations of the single links of the chain may be derived. Thereby, it can be determined if single links of the chain show an extreme wear and if for this reason, the risk for further use of the chain is high or not.

In Fig. 10, graph G3 represents a typical measurement result of a chain, which shows a higher amount of elongation than the chain represented by the measurement results shown in Fig. 9. For the reason of a higher amount of wear, many of the chain links are more elongated, in this example to the extent of 2,5% at average. Therefore, the maxima of the Gauss fit at T₄ and T₅ with a distance of Delta T are wider apart than the maxima T₁ and T₂ of Fig. 9. At the same time, the standard deviations d₄, d₅ are higher than the standard deviations d₁, d₂ of the case of Fig. 9. A valuable condition parameter may also be derived from the relation of the standard deviation d in each case/for each chain to the determined time distances Delta T.

In Fig. 11, graph G4 represents measurement data of a multitude of chains comprising two groups of chains. The first group of chains, represented by circles, comprises chains with an relative elongation of 1,5% while the second group of chains, represented by squares, comprise chains with an relative elongation of 2,5%. The relative elongation of each chain generally is an average elongation of the chain links it consists of.

On the vertical axis, a parameter corresponding to Delta T of the Gaussian fits of each chain is marked while on the horizontal axis, the standard deviation of a Gaussian fit of the measurement result of each of the chain is marked. Hence, the symbols (circles and squares) which are positioned on the straight line of the graph G4 represent a structure where a greater extent of wear results in a greater time distance Delta T of the maxima and at the same time, a higher standard deviation d. However, in particular for chains with a smaller extent of wear, the standard deviation d is often higher and therefore, the distribution of standard deviations as shown in Fig.11 may also be used to gain additional information concerning a concrete chain.

Coming back to Fig. 5a, similar to step S3 of the method described in Fig. 4a, step S14 of Fig. 5a can comprise sub-steps of estimating the amount of wear of the roller chain drive 1 according to the method described above, estimating the lifetime of the roller chain drive 1, determining parameters to optimize the conditions of the roller chain drive 1, and/or determining instructions for optimizing the conditions of the roller chain drive 1. Alternatively, a conversion from a time domain of the recorded emitted sound to a frequency domain by the fast Fourier transformation can also be performed on the external server in step S13. In this case, only emitted sound data in the time domain are forwarded to the external server 7 in step 511.

In step S15, the determined conditions of the roller chain drive 1 are sent back to the mobile device 5, which displays the conditions of the roller chain drive 1 through the display 13 in step S16 (similar to step S4 according to the method described in Figure 4a).

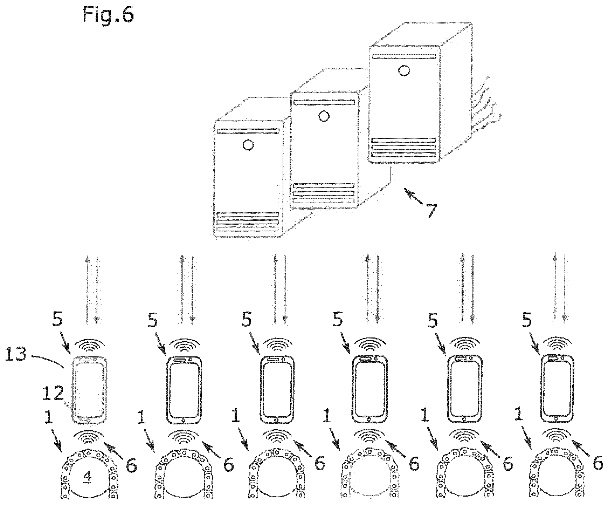

Figure 6 is a view showing the configuration of a further embodiment of a system for performing the method described according to Figure 5a.

In the embodiment of Figure 6, the server 7 receives emitted sound data and/or frequency data of an emitted sound 6 that occurs in the vicinity of a plurality of roller chain drives 1 and generated during movement of the rollers 2 onto the sprockets 4 in real-time from a plurality of mobile devices 5, and compares the conditions of the plurality of roller chain drives 1 with each other. By the fact that several mobile devices 5 may determine the conditions of the several roller chain drives 1, a serial failure can be detected quickly and measurements at different chains may easily compared in order to generate a comprehensive database which may serve as an expert system or as a basis of training data for a self-learning system. The server 7 may comprise a database server, a computing server, a proxy server, a virtual server, a file server, a catalog server, a communication server, a web server, a game server, or an application server (not shown).

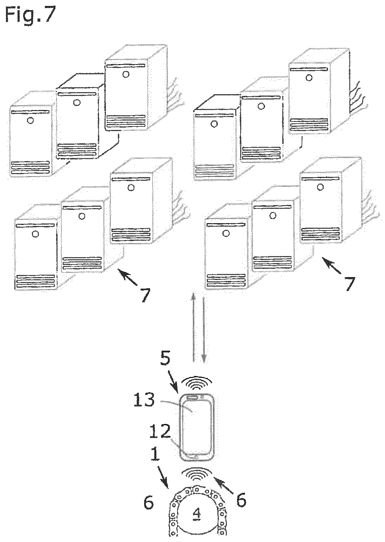

In another embodiment of a system for performing a method for determining conditions of a roller chain drive, a single mobile device 5 can also use multiple servers 7, as shown in Figure 7.

Figure 12 shows a typical sample of noise measurement data 6 captured over time near a chain drive. The intensity of the signal corresponds to a measured acceleration and is marked on the vertical axis.

Figure 13 shows a typical Fourier spectrum of transformed noise measurement data captured near a chain drive with typical harmonics, of which some are marked on the horizontal axis by selected frequency windows 104,105,106.

Figure 14 shows a graph representing characteristic noise events 107, 108, 109 occurring at points of time 101, 102, 103 and resulting from a Fourier spectrum as shown in Figure 13 after selection of frequency windows and transformation back to the time domain. The characteristic noise events 107, 108, 109 in Fig. 14 have a time difference m.

### List of reference signs:

| | |
|---|---|
| 1 | roller chain drive |
| 2 | roller of the roller chain drive |
| 3 | chain pin of the roller chain drive |
| 4 | sprocket of the roller chain drive |
| 5 | mobile device |
| 6 | emitted sound of the roller chain drive |
| 7 | external server |
| 8 | inner link section of the roller chain drive |
| 9 | outer link section of the roller chain drive |
| 10 | teeth of the sprocket of the roller chain drive |
| 11 | roller chain of the roller chain drive |
| 12 | microphone of the mobile device |
| 13 | display of the mobile device |
| G1, G2, G3, G4 | Graphs |
| T0-T4 | Position of maxima of statistical distributions |
| d0-d4 | Standard deviations of statistical distributions |
| Delta T | Time distance between maxima of statistical distributions |
| 101, 102, 103 | Points of time |
| 104, 105, 106 | Frequency windows |
| 107, 108, 109 | Noise events |

## Claims

1. A method for determining conditions of a roller chain drive (1) or bush chain drive having a plurality of rollers (2) and/or bushes, chain pins (3) and at least one sprocket (4), comprising the following steps:
moving the roller chain drive (1) or bush chain drive;
capturing measurement data comprising recording an emitted sound (6) of the roller chain drive (1) or bush chain drive,
carrying out a transformation of the measurement data to the frequency domain,
processing of the measurement data in the time as well as frequency domain;
identifying in the time domain periodic characteristic noise events (107, 108, 109) and determining time differences of subsequent pairs of characteristic noise events;
determining a statistical distribution of the determined time differences;
determining the conditions of the roller chain drive (1) or bush chain drive based on parameters of the statistical distribution.

2. A method according to claim 1, wherein in the frequency domain, a main first harmonic and a complimentary first harmonic are selected for further processing wherein the frequency of the main first harmonic corresponds to the number of teeth of the sprocket multiplied by the number of revolutions of the sprocket per second and wherein the frequency of the complimentary first harmonic corresponds to half the frequency of the main first harmonic.

3. A method according to claim 2, wherein the main first harmonic comprises the signal at the exact frequency of the main first harmonic and includes frequency signals of frequencies deviating less than 5%, in particular less than 2 %, further in particular less than 1%, further in particular less than 0,5% from the frequency of the main first harmonic and/or wherein the complimentary first harmonic comprises the signal at the exact frequency of the complimentary first harmonic and includes frequency signals of frequencies deviating less than 5%, in particular less than 2 %, further in particular less than 1%, further in particular less than 0,5% from the frequency of the complimentary first harmonic.

4. A method according to claim 3, wherein the frequency deviation from the main first harmonic and/or from the complimentary first harmonic and in particular the deviations from higher harmonics of the main first harmonic and the complimentary first harmonic are selected or selectable individually during the process of determining the conditions of a roller chain drive (1) or bush chain drive.

5. A method according to claim 2, 3 or 4, wherein at least the next 3, in particular the next 4 higher harmonics of the main first harmonic are selected for further processing and/or at least the next 3, in particular the next 5 higher harmonics of the complimentary first harmonic are selected for further processing.

6. A method according to claim 4 or 5, wherein the selected harmonics are further processed and their signals are transformed back into the time domain.

7. A method according to one of claims 1 to 6, wherein the periodic characteristic noise events (107, 108, 109) identified in the time domain comprise periodic noise events each of which is representing interaction of one link of the chain with the at least one sprocket.

8. A method according to one of claims 1 to 7, wherein the parameters of the statistical distribution of the time differences on which the determination of the conditions of the roller chain drive (1) or bush chain drive is based comprise the position(s) of one or more maxima of Gaussian distributions and/or the time distance (Delta T) of two maxima of Gaussian distributions and/or the standard deviation (d) of one or more of the Gaussian distributions.

9. A method according to claim 8, wherein first condition parameter representing an average value of a percentage of elongation of the roller chain or bush chain is determined based on the time distance (Delta T) between the maxima of two Gaussian distributions of the determined time differences and/or that a second condition parameter is determined from the standard deviations (d) of two Gaussian distributions of the determined time differences.

10. A method according to claim 9 wherein a first and a second condition parameter is determined and a third condition parameter is determined based on the first and second parameter.

11. A method according to any one of claims 1 to 10, further comprising a step of recording an emitted sound by a mobile device and forwarding the emitted sound and/or data derived from the recorded sound signals to an external server (7) and in particular forwarding the emitted sound and/or the data to the external server (7) in real-time.

12. A method for determining the condition of a roller chain drive (1) or bush chain drive according to claim 11, wherein the external server (7) processes the data and sends the determined conditions of the roller chain drive (1) or bush chain drive back to the mobile device (5), which displays the conditions.

13. An apparatus, in particular a mobile device, configured to determine conditions of a roller chain drive (1) or bush chain drive having a plurality of rollers (2) and/or bushes, chain pins (3) and sprockets (4) by
capturing measurement data by recording an emitted sound (6) of the moving roller chain drive (1) or bush chain drive,
carrying out a transformation of the measurement data to the frequency domain,
processing of the measurement data in the time as well as frequency domain (6),
identifying in the time domain periodic characteristic noise events (107, 108, 109) and determining time differences of subsequent pairs of characteristic noise events,
determining a statistical distribution of the determined time differences and
determining the conditions of the roller chain drive (1) or bush chain drive based on parameters of the statistical distribution.

14. A server (7) configured to communicate in real-time with at least one mobile device (5) and determine conditions of at least one roller chain drive (1) or bush chain drive having a plurality of rollers (2) and/or bushes, chain pins (3) and sprockets (4) by
receiving measurement data or pre-processed measurement data from the at least one mobile device (5) of an emitted sound (6) of the at least one roller chain drive (1) or bush chain drive and generated during movement of the rollers (2) and/or bushes on to the sprockets (4),
carrying out a transformation of the measurement data to the frequency domain,
processing the measurement data in the time as well as frequency domain (6),
identifying in the time domain periodic characteristic noise events (107, 108, 109) and determining time differences of subsequent pairs of characteristic noise events,
determining a statistical distribution of the determined time differences,
determining the conditions of the roller chain drive (1) or bush chain drive based on parameters of the statistical distribution and
transmitting the conditions of the at least one roller chain drive (1) or bush chain drive to the at least one mobile device (5).

15. A computer program product configured to run on a data processing system and to determine conditions of a roller chain drive (1) or bush chain drive having a plurality of rollers (2) and/or bushes, chain pins (3) and sprockets (4), wherein, when the program is running on the system, the data processing system is configured to perform the following steps:
carrying out a transformation of the measurement data to the frequency domain,
processing of the measurement data in the time as well as frequency domain (6);
identifying in the time domain periodic characteristic noise events (107, 108, 109) and determining time distances of subsequent characteristic noise events;
determining a statistical distribution of the determined time differences;
determining the conditions of the roller chain drive (1) or bush chain drive based on parameters of the statistical distribution.
